# EUROPEAN PATENT APPLICATION

(11) **EP 2 325 852 A1**
(43) Date of publication of application: **25.05.2011**
(21) Application number: 09176377.1
(22) Date of filing: 18.11.2009
(51) Int. Cl.: H01F 27/30, H01F 27/32, H01F 41/12, B29C 70/70

(54) **A method of manufacturing a transformer coil**

(71) Applicant: ABB Technology AG, 8050 Zürich (CH)
(72) Inventor: Lee, Chang-Hoon, 109-2403, Chonan, Chungchongnam-do (KR); Lim, Jong-Yun, 305-602, Chonan, Chungchongnam-do (KR)
(74) Representative: Kock, Ina

(57) **Abstract**

A method of manufacturing a transformer coil comprising a conductive winding enclosed in a resin by means of a mold including two tubular inner mold parts and one outer mold part with a length being at least the sum of the length of the inner mold parts, the method comprises the steps of winding a first conductor around a first of said inner mold part, winding a second conductor around a second of said inner mold part, joining one end of the first inner mold part to one end of the second inner mold part forming a sealed joint between the mold parts, connecting electrically the first and second conductors forming one winding, arranging the joined inner mold parts with the winding in the outer mold part, enclosing the winding between the inner and outer mold parts, filling resin into the space enclosed between the mold parts, letting the resin cure, and remove the mold parts.

## Description

### TECHNICAL AREA

The invention relates to a method of manufacturing a transformer coil comprising a conductive winding enclosed in a resin.

### TECHNICAL BACKGROUND

A transformer coil comprises one or more windings of conductors. A transformer comprises an iron core and a coil which is arranged around the iron core. The coil used in a dry transformer is normally manufactured by arranging the winding between an inner mold and an outer mold. The enclosed volume with the winding is then filled with a resin and the resin is allowed to cure. EP1216140 describes a method of manufacturing a transformer coil encapsulated in resin. US5396210 shows one design of a three phase cast coil transformer.

The winding is normally manufactured in a winding machine where the conductor is wound around a mandrel to produce a finished winding. The length, perpendicular to the conductor, of the manufactured winding is limited to the maximum length allowed in the winding machine. For large power and/or high voltage transformers the required length of a coil can be quite long. If the required length of a coil, needed in a transformer, is larger than the maximum length allowed in the winding machine, the solution is then wind two individual windings and to cast them individually and then to connect the two individual cast coils. The transformer will have two individual coils per phase, each cast in resin separately and they can then be connected in parallel or in series and placed around an iron core.

Having two individual coils electrically connected to each other has a number of drawbacks;
- The connection point between the two coils is mechanically weak. If the transformer is subjected to an earthquake, the mechanical and electrical connection between the two individual coils might be interrupted. Vibrations in the transformer might weaken the connection point between the two individual coils which might lead to future mechanical or electrical disconnect problems. If the transformer is subjected to a short circuit, the connection point between the two coils is the electrically weakest point.
- Added complexity in the mechanical design is needed to support and fixate the individual coils.
- Manufacturing of a transformer is more complex and time consuming when using two individually cast coils that are connected on one each iron core. First one coil have to be fixed on the iron core and then the other placed on top of the first, and then ensure the electrical connection and then the two coils have to be fixated and secured together.

### SUMMARY OF THE INVENTION

One object of the present invention is to provide an improved method for manufacturing a long transformer coil which overcomes at least some of the above mentioned drawbacks.

This object is achieved by the method as defined in claim 1.

According to the invention a mold including two tubular inner mold parts and one outer mold part with a length being at least the sum of the length of the inner mold parts is used.

The method comprises winding a first conductor around a first inner mold, winding a second conductor around a second inner mold, joining one end of the first inner mold part to one end of the second inner mold part forming a sealed joint between the mold parts, connecting electrically the first and second conductors forming one winding, placing the joined inner mold parts with the winding in an outer mold, enclosing the winding between the inner and outer mold parts, filling the resin into the space enclosed between the mold parts letting the resin cure, and remove the outer mold parts.

In another embodiment of the present invention, the joined inner mold parts with the windings are further enclosed in end parts (6) enclosing the volume between outer mold (5) and the joined inner mold parts (1', 1").

In another embodiment of the present invention, the method further comprises the step of curing the resin by heating said resin to a predetermined temperature for a predetermined time.

In another embodiment of the present invention, the method further comprises the step of heating the resin by applying a DC current to the coil to resistively heat the conductors and said epoxy to a predetermined temperature for a predetermined time.

In another embodiment of the present invention, the method further comprises the step of connecting the first and second conductors in series.

In another embodiment of the present invention, the method further comprises the step of connecting the first and second conductors in parallel.

In another embodiment of the present invention, the method further comprises the step of placing the winding in a horizontal position in a vacuum chamber and a casting resin is introduced through an open area 7 in the outer mold.

The present invention is particularly suited for the manufacture of coils for transformers used in large power or high voltage applications.

When manufacturing a dry transformer coil i.e. windings embedded in resin, the length of the winding is limited to the length of the winding machine. For large currents and/or large voltages (>1kV) one need more than one coil per phase to operate the transformer. With two individual coils per phase, the connection point between the two windings is a weak electrical and mechanical point. The idea of the present invention is to connect the windings before the casting and then cast the two winding as one integral coil. This will solve the problems described in the background.

A single cast coil comprising two interconnected windings will easier get clearance or type approval due to that the active parts and the connection point is inside resin insulation.

The connection point between the two windings is now mechanically strong since it is an integral part of the cast. It is no longer sensitive to transformer vibrations or seismic activities such as an earthquake. The mechanical strength of the connection makes the electrical connection between the two individual coils more secure. No additional mechanical solutions are needed to fixate and support two separate coils and the problems of connecting them mounted on a transformer are solved.

The assembly of core and coil is easier since one only have to fit one integral coil on the iron core as opposed to two individual coils and all active parts are enclosed in resin.

The conductors of the winding are wound on the inner mould from alternate layers of conductor, e.g. cupper or aluminium, and insulating tape on a conventional winding machine in a layer or disc type format.

### BRIEF DESCRIPTION OF THE DRAWINGS

The drawings constitute a part of this specification and include exemplary embodiments to the invention, which may be embodied in various forms.
Fig 1. Shows schematically a winding as it is manufactured in the winding machine.
Fig 2. The windings and outer mold parts, prior to assembly, according to an embodiment of the method.
Fig 3. The coils and the inner mold have been assembled.
Fig 4. The outer mold has been assembled around the coils.
Fig 5. Embodiments of the leak proof joint between the two inner molds.

### DETAILED DESCRIPTION OF THE DRAWINGS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

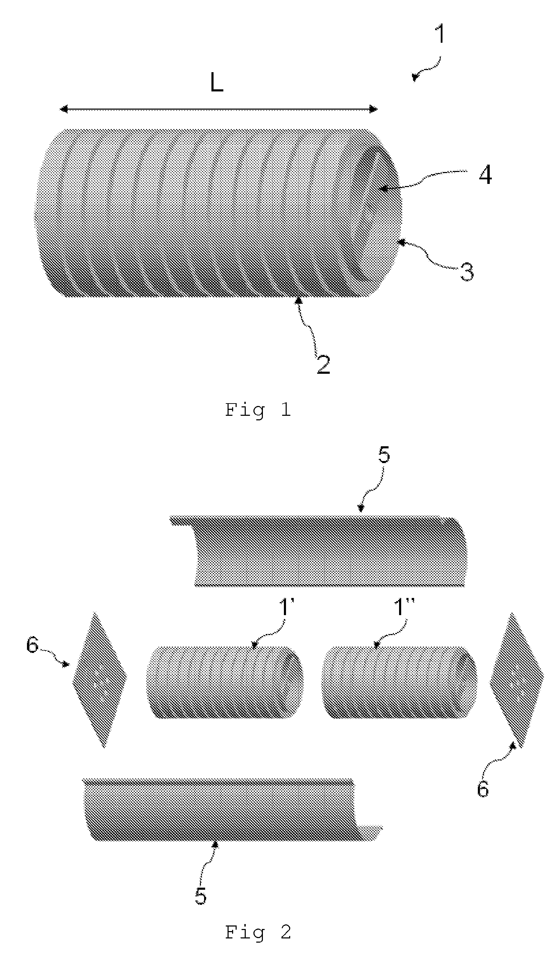

Fig 1. Shows schematically a winding 1 as it looks when it is manufactured in the winding machine. The conductors 2 are wound up around an inner mold or mandrel 3. The inner mold might be supported by some support structure 4 e.g. cross beams. The maximum length of the winding is L.

Fig 2. The windings 1', 1" and outer molds 5, prior to assembly, according to one embodiment of the current invention. The two windings 1', 1" each wound around an inner mold 3 as in fig 1. The mold further comprises side molds 6 or side plates arranged at the ends of the inner molds. The outer mold 5 can be in one part or comprising several parts joined together.

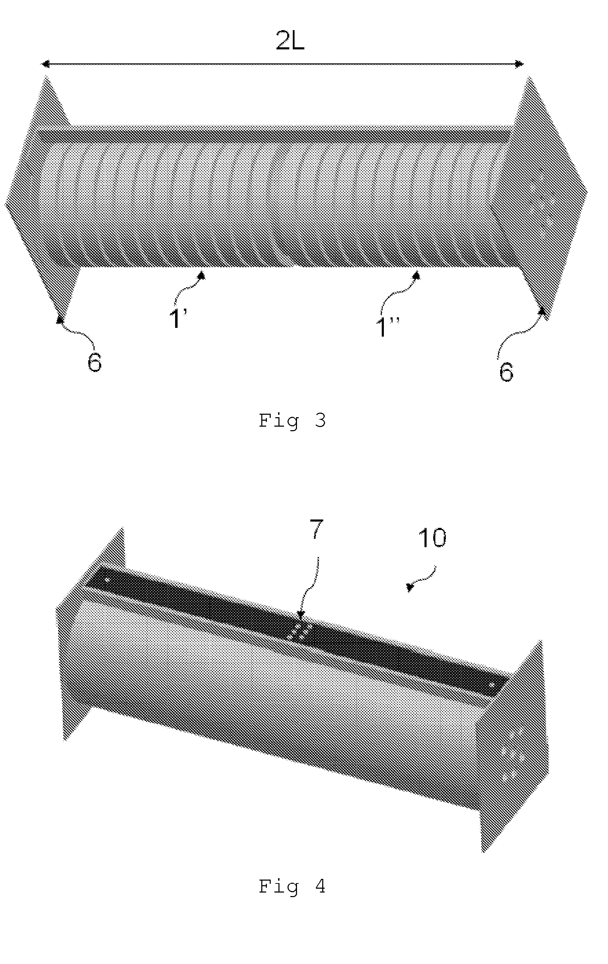

Fig 3. The windings 1', 1" and the inner molds 3 have been assembled. The inner molds are arranged with fixtures that ensure that they can be attached to each other and that the joint between the two inner molds are leak proof. This fixture can be an H-shaped, high temperature, rubber packing (e.g. silicon) arranged between two inner molds. The joint can also be sealed by tape (polymer and/or metal e.g. aluminium) and/or some other adhesion material. The joint can be a steel ring tightly arranged on the inside of the joint between two inner molds 3.

The length of this coil is 2L compared to the length L of the single winding in Fig 1.

Fig 4. The outer mold has been assembled around the windings. The casting mold assembly 10 is placed in a horizontal position in a vacuum chamber and a casting resin, for example an epoxy resin, is introduced through an open area 7 in the outer mold 5 to fill the mold with the casting resin. Such a vacuum casting process is well known in the art. It is preferable that the mold assembly 10 be maintained horizontal or level during the gelling and curing process. After the curing process has been completed, the outer mold 5 is removed and the encapsulated long coil is removed from the casting mold assembly. The inner molds 1', 1" can be removed or optionally left on the coil. If the molds are disposable they are discarded and if they are reusable they are cleaned and used again. The resin material could be a resin only or have fibers mixed in the resin such as glass fibers or carbon fibers or similar. Included in the mold, on the outer side of the winding and/or on the inner side of the winding between the inner mold and the conductors, could also be layers of fiber nets or mats, such as glass fiber net, that will be an integral part of the finished cast coil.

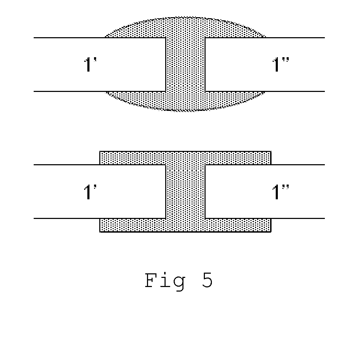

Fig 5 Shows two possible embodiments of the joint between the two inner molds 1', 1" as an H-shaped packing arranged between two inner molds.

The outer mold 5 is arranged with an integrated dome and tap area 7. The tap or dome area 7, being an open exposed area of the coil and mold, makes it well suited for the epoxy filling position for the encapsulation process. This also serves as a reserve area for make up of any epoxy shrinkage.

Before casting resin release agent is applied to the mold parts as is well known in the art. The mold parts normally comprise steel sheets.

When the mold has been filled the resin is allowed to be cured by heating the resin by exposing the mold assembly to a predetermined temperature for a predetermined time. The curing of the resin by heating can also be accomplished by applying a DC current to the coil to resistively heat the conductors and the epoxy encapsulated coil to a predetermined temperature for a predetermined time to achieve epoxy curing.

In the figures the windings and coil appear to be circular but it is clear for a man skilled in the art that the method would work equally well for a oval or other shaped windings and coil.

Even if the description describes a method for manufacturing of a resin enclosed coil with two windings, is obvious for a man skilled in the art that the method is not limited to only connecting and casting two windings into one integrated coil. The method could be used for three or more windings connected and cast into one integral coil for any design or manufacturing reason.

The manufactured coil according to the present invention is suitable for manufacturing a transformer. The transformer comprises an iron core and one or more coils.

While the invention has been described in connection with a preferred embodiment, it is not intended to limit the scope of the invention to the particular form set forth, but on the contrary, it is intended to cover such alternatives, modifications, and equivalents as may be included within the spirit and scope of the invention as defined by the appended claims.

## Claims

1. A method of manufacturing a transformer coil comprising a conductive winding (2) enclosed in a resin by means of a mold including two tubular inner mold parts (1', 1") and one outer mold part (5) with a length being at least the sum of the length of the inner mold parts, the method comprises the steps of:
- winding a first conductor around a first of said inner mold part,
- winding a second conductor around a second of said inner mold part,
- joining one end of the first inner mold part to one end of the second inner mold part forming a sealed joint between the mold parts,
- connecting electrically the first and second conductors forming one winding,
- arranging the joined inner mold parts with the winding in the outer mold part,
- enclosing the winding between the inner and outer mold parts,
- filling resin into the space enclosed between the mold parts,
- letting the resin cure, and
- remove the outer mold parts (5).

2. The method according to claim 1, wherein the joined inner mold parts with the windings are further enclosed in end parts (6) enclosing the volume between outer mold (5) and the joined inner mold parts (1', 1").

3. The method according to any of the claims 1-2, wherein the method comprises the step of;
curing the resin by heating said resin to a predetermined temperature for a predetermined time.

4. The method according to the claim 3, wherein the method comprises the step of;
heating the resin by applying a DC current to the coil to resistively heat the conductors and said epoxy to a predetermined temperature for a predetermined time.

5. The method according to any of the claims 1-4, wherein the method comprises the step of;
connecting the first and second conductors in series.

6. The method according to any of the claims 1-4, wherein the method comprises the step of;
connecting the first and second conductors in parallel.

7. The method according to any of the claims 1-6, wherein the method comprises the step of;
placing the winding in a horizontal position in a vacuum chamber and a casting resin is introduced through an open area 7 in the outer mold.

8. A transformer comprising at least one coil manufactured according to any of the claims 1-7.
